# NEUE EUROPÄISCHE PATENTSCHRIFT

(11) **EP 1 008 569 B2**
(45) Veröffentlichungstag und Bekanntmachung des Hinweises auf die Entscheidung über den Einspruch: **07.10.2009**
(45) Hinweis auf die Patenterteilung: 13.08.2003
(21) Anmeldenummer: 99121311.7
(22) Anmeldetag: 26.10.1999
(51) Int. Cl.: C04B 35/573, C04B 35/80

(54) **Verfahren zur Herstellung eines mittels Kohlenstoffkurzfaser verstärkten Siliciumcarbid-Verbundwerkstoffes**
Method of making a short carbon fibre-reinforced silicon carbide composite material
Procedé de fabrication d'un materiau composite en carbure de silicium renforcé par fibre de carbone court

(30) Priorität: 09.12.1998 DE 19856721
(43) Veröffentlichungstag der Anmeldung: 14.06.2000
(73) Patentinhaber: ECM Ingenieur-Unternehmen für Energie-und Umwelttechnik GmbH, 80339 München (DE); IABG Industrieanlagen-Betriebsgesellschaft mbH, 85521 Ottobrunn (DE)
(72) Erfinder: Krödel, Matthias, 85521 Ottobrunn (DE); Goedtke, Peter, 81667 München (DE); Papenburg, Ulrich, 85658 Egmating (DE)
(74) Vertreter: Meinke, Dabringhaus und Partner GbR

(56) Entgegenhaltungen:
- EP-A- 0 864 548
- DE-C- 19 711 829

## Beschreibung

Die Erfindung richtet sich auf ein Verfahren zur Herstellung eines mittels Kohlenstoffkurzfasern verstärkten Siliciumcarbid-Verbundwerkstoffes bzw. eines daraus hergestellten Formkörpers.

Ziel der keramischen Verbundwerkstoff-Entwicklung ist es, die Sprödigkeit der monolithischen pulvermetallurgisch hergestellten Keramiken zu senken, d.h. ihre Steifigkeit zu senken und ihre Bruchdehnung zu erhöhen. Ein bekannter Verbundwerkstoff, der diese Eigenschaftskombination in hinreichendem Maße aufweist, ist ein mit Kohlenstoffasern verstärkter Kohlenstoff (C/C). Dieser Werkstoff wird deshalb z.B. als Bremsscheibe und Reibbelag für Flugzeug- oder Rennwagenbremsen verwendet. Nachteilig an diesem Verbundwerkstoff ist jedoch die geringe Oxidationsbeständigkeit des Kohlenstoffs ab Anwendungstemperaturen von oberhalb 350°C an Luft, die einen hohen Abbrand bzw. Verschleiß der Bauteile aus C/C zur Folge hat, wenn diese nicht unter Sauerstoffausschluß (Schutzgas oder Vakuum) gehalten werden können. Anwendungen ohne Inertgasschutz liegen bei gekapselten Flugzeugbremsen oder als thermisches Schutzschild an Flugkörpern mit kurzer Brenndauer. Die Aufbringung von Oxidationsschutzschichten auf das C/C hat zwar geringfügige Verbesserungen gebracht aber das Problem der Dauer-Oxidationsbeständigkeit nicht vollständig lösen können.

Die Werkstoffentwicklung konzentrierte sich daraufhin auf die Herstellung von mit Kohlenstoff- oder Graphitfasern kontinuierlich verstärkten (Langfaserverstärkung) Siliciumcarbidbauteilen, in denen einerseits die Kohlenstoffasern durch die umgebende SiC-Matrix besser (zumindest kurzfristig) gegen Oxidation geschützt sind und andererseits die Fasereinbindung entsprechende Fehlstellen aufweist, so daß bei noch ausreichender Verstärkungswirkung der Kohlenstofffaser die Rißausbreitung an den Grenzflächen zwischen Faser und Matrix durch Energieverzehr gehemmt und ein schadenstoleranteres Bruchverhalten erzielt wird. Die Realisierung eines solchen Werkstoffes gilt jedoch bis heute als schwierig, da sich Silicium und Kohlenstoff bei höheren Temperaturen während der Herstellung sehr leicht durch eine exotherme Reaktion zu Siliciumcarbid umsetzen, also die verstärkend wirkenden Fasern unter Verlust ihrer Verstärkungswirkung zumindest teilweise zu Siliciumcarbid umgewandelt werden und weil sich eine Herstellung von C-Faserkörpern und der chemischen Gasphaseninfiltration (CVI) mit Siliciumcarbid oder mit Siliciumcarbidpulver zum Beispiel durch Heißpressen nicht als hinreichend erfolgreich und wirtschaftlich erwies. Nachteilig bei diesen Werkstoffen mit Kohlenstoff-Langfaserverstärkung ist auch, daß die C-Fasern ein extrem anisotropes Wärmeausdehnungsverhalten (in Längsachse: 0, im Querschnitt: 12 x 10⁻⁶ K⁻¹) besitzen, was bei hohen Anwendungstemperaturen zur Rißbildung in der SiC-Matrix und damit wiederum zum ungehinderten Abbrand (Oxidation) der verstärkend wirkenden Kohlenstoffasern führt.

Verbesserungen verspricht man sich in der Werkstofftechnik durch die Beschichtung der C-Fasern mittels CVD- oder CVI-Verfahren (CVD: Chemical Vapour Deposition, CVI: Chemical Vapour Infiltration) mit Schutzschichten aus refraktären Stoffen, wie Bornitrid (BN), Pyrokohlenstoff (PyC), Titancarbid (TiC) oder Siliciumcarbid (SiC) vor der Formgebung bzw. der Infiltration mit flüssigem Silicium (Si).

Aus der DE-39 33 039-C2 ist bekannt, daß man sich der Schutzwirkung von pyrolytisch abgeschiedenem Kohlenstoff (PyC) bedient, indem man das Bauteil aus Kohlenstoffkurzfasern oder Kohlenstoffaserfilzen zunächst mit einer ersten Schicht aus pyrolitischem Kohlenstoff überzieht, dann das Bauteil graphitiert und danach mit einer zweiten PyC-Schicht versieht, ehe das Bauteil mit flüssigem metallischen Silicium infiltriert wird. Nachteilig bei diesem Verfahren ist der Einsatz der aufwendigen und damit kostenintensiven CVD- bzw. CVI-Technik und darüber hinaus ist der Herstellungsprozeß bei mehrlagiger PyC-Beschichtung sehr langwierig und aufwendig.

In der DE-44 38 456-A1 geht man von in spezieller Weise angeordneten Lagen von Bündeln aus Kohlenstoffendlosfasern aus, die mit einer Kunstharzmatrix umgeben werden. Nach dem Verkoken des mit C-Faserbündeln verstärkten Kunstharzkörpers auf CFK-Basis (CFK: Kohlenstoffaserverstärkter Kunststoff) weist das Bauteil aufgrund seiner speziellen Herstellungstechnik im Inneren translaminare Kanäle auf, die bei der Siliciuminfiltration entsprechend aufgefüllt werden. Das eingebrachte Silicium setzt sich dann mit der Kohlenstoffmatrix im wesentlichen zu Siliciumcarbid um. Auch hier ist der Aufbau des Halbzeugs aus Langfasergelegen vergleichsweise aufwendig, das Bauteil weist, je nach Anordnung der Kohlenstoffaserbündel, insgesamt oder in sich lagenweise anisotrope Eigenschaften auf. Im Einsatz kommt es dabei zu erheblichen Oxidationseffekten, wenn eine der gegen Oxidation schützenden anisotropen Schichten aufgebraucht ist, liegt immer die darunter befindliche Schicht mit C-Fasern ungeschützt frei und führt zwangsläufig zum Abbrand des gesamten Körpers.

Aus der DE-197 10 105-A ist ein mehrstufiger Prozeß zur Herstellung von derartigen oxidationsbeständigen Verbundwerkstoffen bekannt. Bei diesem Verfahren werden im ersten Schritt Fasergewebe-Prepregs aus Graphitfaser-Rovings gewebt bzw. hergestellt. Das Gewebe wird anschließend mit Phenolharz imprägniert und in einer Presse unter Druck bei Temperaturen oberhalb 100°C ausgehärtet. Nach dem Preßvorgang werden die ausgehärteten Gewebe unter Schutzgas bei Temperaturen von mindestens 900°C verkokt bzw. carbonisiert. Nach dem Abkühlen wird das carbonisierte Gewebe im nächsten Prozeßschritt erneut mit Kunstharz imprägniert und unter Schutzgas bei Maximaltemperaturen von 900°C erneut verkokt. Anschließend erfolgt eine nochmalige Imprägnierung der bereits mehrfach imprägnierten und carbonisierten Graphitfaser-Gewebe mit Steinkohlenteerpech. Auf diesen dritten Imprägnierungsschritt erfolgt wieder eine Temperaturbehandlung zur Umwandlung des Pechs in Kohlenstoff. Anschließend werden die mehrfach imprägnierten und carbonisierten Gewebe unter Schutzgas bei Temperaturen von ca. 2.000°C graphitiert, um Einfluß auf die Reaktivität der eingesetzten bzw. erzeugten Kohlenstoffe zu nehmen. Im nächsten Arbeitsschritt werden die Gewebe zu Partikelgrößen von 0 bis 2 mm Größe zermahlen. Das gemahlene Material wird dann in einem Kneter mit einem flüssigen Kunstharz-Pechgemisch mit hoher Kohlenstoffausbeute vermischt. Nach dem Mischvorgang wird diese Mischung in beheizbare Gesenkpressen eingefüllt und unter entsprechendem Druck und einer Temperatur von mindestens 100°C verpreßt und ausgehärtet. Nach dem Entformen folgt im nächsten Prozeßschritt eine Verkokung des Körpers unter Schutzgas bei Temperaturen von etwa 900 bis 1.200°C. Die verkokten Körper werden nach dem Abkühlen erneut bei Temperaturen von etwa 2.000°C graphitiert. Der graphitierte Körper wird im nächsten Prozeßschritt in einen vakuum- oder schutzgasbetriebenen Ofen überführt, in dem sich ein Tiegel mit Silicium und porösen Dochten befindet, auf dem der Körper in bekannter Weise positioniert wird. Diese Stützen wirken bei der Siliciuminfiltration bei Temperaturen oberhalb des Schmelzpunktes von Silicium in bekannter Weise als Dochte zum Imprägnieren des Siliciums aus dem Tiegel in das zu infiltrierende Bauteil. Das infiltrierte Silicium reagiert dann mehr oder weniger mit dem angebotenen Kohlenstoff aus der Matrix, der zuvor erzeugten Faserbeschichtung und teilweise den Faseroberflächen. Zum Stand der Technik sei auch auf die DE-C-197 11 829 verwiesen, bei der die Faserbündel zusätzlich mit pyrolysierbarem Bindemittel imprägniert werden, und zudem keine Angaben zur Zusammensetzung der Faserschlichte gemacht werden.

Nachteilig bei diesen bekannten Verfahren ist außerdem, daß die aufwendig erzeugten Kohlenstoff-Schutzschichten beim Mahlprozeß teilweise zerstört werden und das Silicium bei der Infiltration durch die rissige Schutzbeschichtung ungehindert mit der Graphitfaser-Verstärkung zumindest zu Siliciumcarbid abreagieren kann. Mit diesem mehrstufigen und äußerst energie-, zeit- und damit kostenintensiven Verfahren können mit Graphitkurzfasern verstärkte Siliciumcarbid-Werkstoffe mit relativ hoher Bruchdehnung und relativ niedriger Festigkeit (< 60 MPa) hergestellt werden.

Aufgabe der Erfindung ist die Schaffung einer Lösung, mit der Formkörper, platten- und rohrförmiges Vormaterial od. dgl. aus mittels Kohlenstoffkurzfasern verstärktem Siliciumcarbid-Verbundwerkstoffen in einem einfachen Verfahren herstellbar sind sowie als thermo-mechanisch stabiler, bis 1.800°C im Dauereinsatz als oxidationsbeständiger keramischer Verbundwerkstoff einsetzbar ist.

Mit einem Verfahren der eingangs bezeichneten Art wird diese Aufgabe gemäß Anspruch 1 der Erfindung gelöst.

Grundsätzlich sind beschichtete Kohlenstoffasern bekannt. Der Vorteil der vorliegenden Erfindung besteht darin, die Kohlenstoffaser-Roving-Zuschnitte und/oder die Kohlenstoffaserbündelabschnitte so in dem Verbundwerkstoff einzusetzen, daß sie in einer Siliciumcarbid-Matrix eingebettet sind, so daß entsprechend verstärkte Verbundwerkstoffe mit hoher Bruchzähigkeit zur Verfügung gestellt werden können, d.h. kohlenstoffaserverstärktes Siliciumcarbid.

Um dies teilweise zu wiederholen, sei darauf hingewiesen, daß die vorliegende Verfahrensweise eine kostengünstige und umweltfreundliche Hertellungstechnologie darstellt. Sie arbeitet beispielsweise ausschließlich mit Trockenharz, d.h. ohne Lösungsmittel. Auch ist eine Nachimprägnierung nicht notwendig, da nur ein Herstellungsschritt zum entformbaren Bauteil erfolgt, was energie- und zeitsparend ist. Vorteilhaft ist auch, daß bei der vorliegenden Erfindung die Karbonisierung und die anschließende Si-Infiltration bzw. Konvertierung zu SiC in nur einem thermischen Behandlungsschritt durchgeführt wird, was wiederum Energie, Zeit und Kosten spart.

Auch liegt ein Vorteil darin, daß bei der Erfindung mit keramischen Füllstoffen (Keramikpulver) zur Einstellung der speziellen Verbundwerkstoff-Eigenschaften gearbeitet wird. Dies führt zur Minimierung des organischen Harzanteiles, zur Verbesserung des Abrasions- und Korrosionsverhaltens und nicht zuletzt auch zu einer besseren Umweltkondition.

Durch die Verwendung von Trockenharzen ergibt sich ein weiterer Vorteil, der darin liegt, daß durch die definierten Fließgrenzen ein Aufspleißen der festigkeitssteigernden Faserbündel verhindert wird, es handelt sich um eine faserschonende Formgebung. Da auch keine Mahlung notwendig ist, wird ein entsprechender Mahlprozeß von Gewebehalbzeugen eingespart, da ausschließlich mit Faserbündeln definierter Länge gearbeitet wird, wodurch die Werkstoffhomogenität erheblich verbessert wird. Bei Mahlprozessen nach den bekannten Verfahrensweisen kommt es zwangsläufig zu undefinierten Faserlängen.

Auch besteht ein Vorteil darin, daß mit einer Schutzschicht, gebildet aus der Faserbündelschlichte, gearbeitet werden kann, mehrere Schutzschichten sind bei der vorliegenden erfindungsgemäßen Vorgehensweise entbehrlich.

Schließlich arbeitet das erfindungsgemäße Verfahren nur mit temperaturbeständigen Kohlenstoff-Faserbündeln, was beim Stand der Technik nicht der Fall ist, da beispielsweise nach dem Stand der Technik die SiC-Fasern eine maximale Temperaturbeständigkeit von 1.000°C aufweisen. Eine Si-Infiltration, wie erfindungsgemäß vorgeschlagen, d.h. bei Temperaturen von > 1.400°C, ist dort nicht möglich. Hinzu kommt, daß beim erfindungsgemäßen Verfahren die Faserbündel absichtlich nicht imprägniert werden, anders als beim Stand der Technik.

Vorteilhafte Ausgestaltungen der Erfindung sind Gegenstand der Unteransprüche, wobei die Erfindung neben dem reinen Werkstoff oder den entsprechend gestalteten Formkörpern auch die Verwendung dieser Werkstoffe zum Gegenstand hat.

Bei dem erfindungsgemäßen Verfahren zur Herstellung von kohlenstoffkurzfaserverstärktem Siliciumcarbid (C/SiC) mit hoher Bruchzähigkeit und isotropen Eigenschaften wird von hochfesten Kohlenstoffaser-Rovings mit 1000 Einzelfilamenten (1K) bis zu 12000 Einzelfilamenten (12K) ausgegangen, welche mit einer Faserschlichte aus Epoxyharz und/oder Furfurylalkohol und/oder Glycerin und/oder Silanen beschichtet sind. Bei den den kurzfaserverstärkten C/SiC-Verbundwerkstoff verstärkenden Fasern handelt es sich um nicht graphitierte, hochfeste Kohlenstoffaserbündel-Zuschnitte (Rovings). Diese mit der Schlichte versehenen Kohlenstoffaserbündel (Rovings) werden auf Längen zwischen 2 und 10 mm, vorzugsweise 5 bis 8 mm zerschnitten und zusammen mit einem trockenen Phenolharz-Pulver und/oder Phenol-Novolak-Pulver und/oder -Granulate aus diesen willkürlich bzw. isotrop vermischt. Der Mischvorgang sollte äußerst schonend vorgenommen werden, damit die kurzen Faserbündel aus geschnittenen Rovings nicht auffächern und in Einzelfilamente zerfallen. Dieses ist besonders wichtig, damit bei der späteren Matrixinfiltration mit schmelzflüssigem Silicium und der Reaktion zu Siliciumcarbid kein festigkeitsmindernder Faserangriff stattfindet. Diese gemischte Masse wird anschließend in eine dem Endbauteil entsprechende Form/Kontur beliebiger Geometrie und Größe eingefüllt.

Der Kohlenstoffasergehalt kann zwischen 20 und 80 Gew.-%, vorzugsweise 40 - 60 Gew.-%, variiert werden. Durch die erfindungsgemäße Variationsmöglichkeit von Faser- und Matrixgehalt im Halbzeug ist die Möglichkeit gegeben, die physikalischen und mechanischen Eigenschaften, insbesondere die Festigkeit, Steifigkeit, Bruchzähigkeit, Bruchdehnung, Härte und Abrasionsbeständigkeit, Raumgewicht, thermische und elektrische Leitfähigkeit des kurzfaserverstärkten C/SiC-Verbundwerkstoffes gezielt auf die jeweiligen Anwendungsprofile maßzuschneidern.

Das erfindungsgemäße Verfahren sieht auch vor, daß man bei der Mischung, bestehend aus kurzen Kohlenstoffaserbündeln und trockenem Phenolharz-Pulver und/oder Phenol-Novolak-Pulver und/oder Granulaten aus diesen, entsprechende Pulver aus Kohlenstoff und/oder Graphit und/oder Ruß und/oder Siliciumcarbid und/oder Silicium oder ähnliche Materialien beim Mischprozeß beimischt.

Für die Formgebung sind grundsätzlich bekannte Herstellungsverfahren wie z.B. das Gesenkpressen, das isostatische Preßverfahren und auch das sogenannte Vakuumsack-Formgebungsverfahren geeignet. Besonders beim Vakuumsack-Verfahren können komplizierte und große Bauteile problemlos hergestellt werden. Die gefüllte Form wird anschließend beispielsweise in einen Vakuumsack aus Polyamid oder anderen geeigneten Folienmaterialien eingewickelt und unter einer Temperatur zwischen 70 und 150°C mittels einer Vakuumpumpe auf einen Vakuumdruck von < 200 mbar evakuiert (Vakuumsack-Formgebungsverfahren). Das trockene Phenolharz-Pulver und/oder Phenol-Novolak-Pulver und/oder Granulate bzw. Preßmassen aus diesen zwischen den kurzen Kohlenstoffaserbündeln erweichen bzw. verflüssigen ab einer Temperatur von 70°C bis 90°C und fließen in die Porenräume. Bei weiterer Aufheizung oberhalb von 120°C härtet das jetzt flüssige Phenolharz aus, fixiert die stochastisch angeordneten kurzen Kohlenstoffaserbündel im Bauteilgefüge und führt zu einem verfestigten kurzfaserverstärkten CFK-Halbzeug (CFK: kohlenstoffaserverstärkter Kunststoff) mit isotroper bzw. willkürlicher Faserorientierung.

Eine zweite Möglichkeit zur Formgebung besteht z.B. darin, daß man die Form so ausbildet, daß man die Körper in einer Gesenkpresse unter entsprechendem Druck und gleichzeitiger Temperaturaufgabe zwischen 70 und 150°C zu diesen CFK-Formkörpern verpreßt und aushärtet. Bei der Wahl der eingesetzten Phenolharz- und/oder Phenol-Novolak-Pulver ist besonders darauf zu achten, daß man einen Harztyp mit möglichst kurzem Fließweg auswählt. Dadurch wird gewährleistet, daß die Faserbündel bei der Formgebung nur oberflächlich benetzt werden und kein Harz zwischen die Einzelfilamente der Faserbündel dringt. Dadurch wird erfindungsgemäß die unerwünschte Abreaktion der verstärkend wirkenden Fasern verhindert. Die CFK-Halbzeuge besitzen nach der Formgebung in Abhängigkeit der eingesetzten Mengen an Kohlenstoffkurzfasern und Phenolharz-Pulver und/oder Phenol-Novolak-Pulver-Anteil spezifische Gewichte im Bereich zwischen 0,8 und 1,4 g/cm³.

Besonders vorteilhaft bei diesem Verfahren ist, daß die so geformten Halbzeug-Körper aufgrund der willkürlichen bzw. isotropen Faserverstärkung bei dem nachfolgenden thermischen Prozeßschritt keine Formänderungen oder Schwindungen durchläuft.

Durch diese endformnahe Formgebung kann auf bisher übliche aufwendige mechanische Nachbearbeitungsschritte der keramischen Verbundwerkstoffe in der Regel ganz verzichtet werden. Anschließend werden die endformnah hergestellten kurzfaserverstärkten CFK-Halbzeuge in einen widerstandsbeheizten Vakuumofen positioniert, wobei die stöchiometrisch benötigte Siliciummenge in Form von Siliciumgranulat und/oder Siliciumpulver und/oder beschichtetem Siliciumgranulat und/ oder dem Bauteil angepaßten Siliciumgranulat-Formkörpern zur Erzeugung der Siliciumcarbid-Matrix im späteren C/SiC-Verbundwerkstoff auf dem Halbzeug-Körper oder im Inneren des Halbzeug-Körpers positioniert wird, und unter Vakuum und/oder Schutzgas, vorzugsweise Stickstoff oder Argon, auf Temperaturen oberhalb des Schmelzpunktes von Silicium (> 1.405°C) aufgeheizt wird.

Während der Aufheizung unter Sauerstoffausschluß bis zum Schmelzpunkt des Siliciums carbonisiert die oberflächlich anhaftende Faserschlichte bestehend aus Epoxyharz und/oder Furfurylalkohol zu einer dem Faserbündel nicht anhaftenden, aber umhüllenden Kohlenstoffhülse und die Phenolharz-Matrix zwischen den kurzen Kohlenstoffaserbündeln bzw. -Rovings zu Kohlenstoff. Bei dieser Carbonisierung wandelt sich etwa 50 bis 70 Gew.-% der eingesetzten Phenolharzmenge zu Kohlenstoff um. Der Rest gast als Pyrolyseprodukt aus und hinterläßt Porenräume im kurzfaserverstärkten C/C-Kohlenstoffkörper (C/C: kohlenstoffaserverstärkter Kohlenstoff) für die anschließende Siliciuminfiltration. Bei Erreichung der Silicium-Schmelztemperatur von 1.405°C penetriert das flüssige Silicium von oben oder im Inneren des Bauteils in die zuvor erzeugten Poren und Kapillaren des carbonisierten kohlenstoffkurzfaserverstärkten Kohlenstoffkörpers. Bei weiterer Temperatursteigerung bis auf maximal 1.800°C reagiert das Silicium mit dem angebotenen Kohlenstoff aus der Matrix und der die Faserbündel umhüllenden carbonisierten Schlichte, welche eine Art Schutzhülle um die Faserbündel gebildet hat, zu Siliciumcarbid ab.

Durch die Umwandlung der die Faserbündel umhüllenden Kohlenstoffhülse zu Siliciumcarbid wird vorteilhafterweise insitu eine Diffusionssperre für flüssiges Silicium gebildet und damit ein Angriff bzw. eine Abreaktion der Kohlenstoffkurzfaserverstärkung zu Siliciumcarbid verhindert. Hinzu kommt bei dem erfindungsgemäßen Verfahren, daß der Abstand der Kohlenstoff-Einzelfasern (Filamente in den verarbeiteten kurzen Kohlenstoffaserbündeln mit 1.000 bis 12.000 Einzelfasern, 1K-12K) so gering ist (< 1 µm), daß ein Eindringen von schmelzflüssigem Silicium und die damit verbundene und unerwünschte Abreaktion der Verstärkungsfasern zu SiC während des Infiltrationsprozesses in die Faserbündel unmöglich ist und so verhindert wird. Schlimmstenfalls reagieren die äußeren Einzelfasern der verarbeiteten Faserbündel bzw. Fasertaue ab, was aber keinen signifikanten Einfluß auf die hohe Bruchzähigkeit des kurzfaserverstärkten C/SiC-Verbundwerkstoffes hat.

Nach dem Abkühlen liegt ein kohlenstoffkurzfaserverstärkter bzw. kurzfaserbündelverstärkter Siliciumcarbid-Verbundwerkstoff (C/SiC) mit hoher Bruchzähigkeit und Schadenstoleranz, isotropem Charakter, niedrigem Raumgewicht (2,1 bis 2,6 g/cm³), hoher Temperaturbeständigkeit (1.800°C) und Festigkeit (> 100 MPa), keiner Porosität, herausragender Oxidations-, Korrosions- und Abrasionsbeständigkeit vor. Der nicht abreagierte Siliciumanteil in der Siliciumcarbid-Matrix des keramischen C/SiC-Verbundwerkstoffes mit C-Kurzfaserverstärkung liegt aufgrund der stöchiometrischen Dosierung unter oder bei 5 Gew.-%, vorzugsweise unter 1 Gew.-%. Die Bruchdehnung des kurzfaserverstärkten C/SiC-Verbundwerkstoffs liegt in Abhängigkeit vom verstärkenden Fasergehalt im Bereich von 0,2 bis 0,6 %.

Der erfindungsgemäße kurzfaserverstärkte C/SiC-Verbundwerkstoff verfügt darüber hinaus über weitere vorteilhafte Eigenschaften, wie hohe Temperaturwechselbeständigkeit, hohe und durch Variation des Fasergehalts im Verbund einstellbare Wärmeleitfähigkeit, Gas- und Flüssigkeitsdichtigkeit, und eine hohe Härte und damit Abrasionsbeständigkeit. Er ist aufgrund dieses herausragenden Eigenschaftsprofils besonders als Werkstoff für Hochtemperatur-Anwendungen in oxidativen Atmosphären bei gleichzeitig auftretenden thermo-mechanischen Belastungen besonders gut geeignet.

Erfindungsgemäß ist auch eine Anwendung des nach dem Verfahren hergestellten Produktes vorgesehen, wie z.B.

Schmelztiegel für Glas- und Nichteisenmetalle, Raketendüsen, Brennerkomponenten, Ofenmuffeln, Wärmetauscher, Turbinenbauteile, Schutzrohre und Meßsonden, Hochleistungsbremsscheiben bzw. Reibbeläge, opto-mechanische Strukturen und ballistische Schutzkomponenten, wie Panzer-, Prallplatten od. dgl.

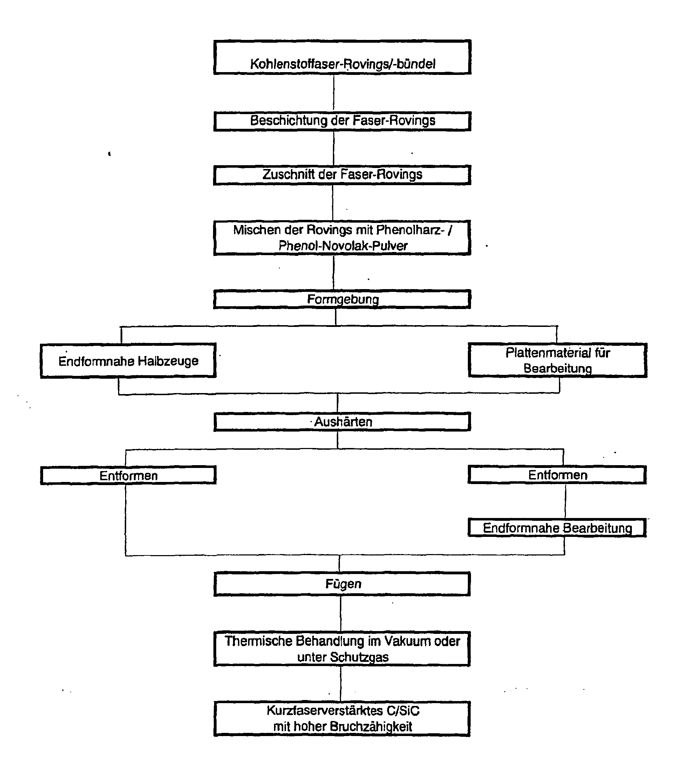

Die Erfindung ist in der einzigen Figur noch als Blockschaltbild mit entsprechender Beschriftung dargestellt.

## Patentansprüche

1. Verfahren zur Herstellung eines mittels Kohlenstoff-Kurzfasern verstärkten Siliciumcarbid-Verbundwerkstoffs und eines daraus bestehenden Formkörpers unter Verwendung von Kohlenstofffaser-Rovings aus Kohlenstofffasern oder -Faserbündeln, die mit Epoxydharz und/oder Glycerin und/oder Furfurylalkohol und/oder Silanen beschichtet und anschließend getrocknet und ausgehärtet sind, mit wenigstens folgenden Verfahrensschritten:
a) Vermischung der zerkleinerten Rovings mit einem trockenen Phenolharz-Pulver od. dgl.,
b) Formgebung unter Druck und/oder Temperatur, wobei das Materialgemisch zur Erzeugung eines endformnahen Halbzeuges bzw. eines Plattenmateriales in eine entsprechende Preßform eingebracht wird, wobei die Form mittels des Vakuum-Sack-Verfahrens einem Unterdruck von < 200 mbar bei einer Temperatur von 70°C bis 150°C unterworfen ist oder das Materialgemisch zur Erzeugung eines endformnahen Halbzeuges bzw. eines Plattenmateriales mittels einer Gesenkpresse oder mittels isostatischen Pressens bis zu 12 bar in die gewünschte Form gebracht wird.
c) Entformen nach Aushärtung,
d) Schmelzinfiltration von Silicium bei Temperaturen oberhalb des Schmelzpunktes von Silicium im Vakuum oder unter Schutzgasatmosphäre, wobei als Endform-Halbzeug bez. als Plattenmaterial ausgebildete Formkörper auf eine Temperatur oberhalb des Schmelzpunktes von Silicium (1.405°C) mit Carbonisierung der Phenolharz-Matrix zwischen den Faserbündeln des Halbzeuges zu Kohlenstoff mit einem Zwischenstadium eines kohlenfaserverstärkten Kohlenstoffes C/C erhitzt wird, wobei 30 bis 50 Gew.-% als Pyrolyse-Produkt unter Bildung von Porenräumen bei Temperatursteigerung über den Schmelzpunkt des Siliciums und Einbringen des Siliciums in die gebildeten Poren und Kapillaren und Carbidisierung des Siliciums unter Erhalt der kurzen Kohlenstofffasern bzw. Faserbündel ausgasen.

2. Verfahren nach Anspruch 1,
**dadurch gekennzeichnet,**
**daß** der entformte und ausgehärtete Formkörper vor der Schmelzinfiltration mit Silicium in einem thermischen Prozeß im Vakuum oder In Schutzgasatmosphäre carbonisiert wird.

3. Verfahren nach Anspruch 1 oder 2,
**dadurch gekennzeichnet,**
**daß** die Zerkleinerung der beschichteten Fasern und Faserbündel zu Bruchstücken in der Größe von 2 bis 20 mm erfolgt.

4. Verfahren nach einem der vorangehenden Ansprüche,
**dadurch gekennzeichnet,**
**daß** die Vermischung der Faserstücke mit einem trockenen Phenolharz-Pulver und/oder Phenol-Novolak-Pulver und/oder Granulat-Preßmassen aus diesen Stoffen vorgenommen wird.

5. Verfahren nach Anspruch 4,
**dadurch gekennzeichnet,**
**daß** eine Mischung Fasern zwischen 20 und 80 Gew.-%, vorzugsweise 50 bis 60 Gew.-%, mit einem Anteil des Phenolharz-Pulvers und/oder Phenol-Novolak-Pulvers zwischen 20 und 80 Gew.-%, vorzugsweise 40 bis 50 %, vorgenommen wird.

6. Verfahren nach Anspruch 5,
**dadurch gekennzeichnet,**
**daß** bei der Mischung Pulver aus Kohlenstoff und/oder Graphit und/oder Ruß und/oder Siliciumcarbid und/oder Silicium zugefügt werden.

7. Verfahren nach einem der vorangehenden Ansprüche,
**dadurch gekennzeichnet,**
**dass** die befüllte Form in einen Vakuumsack aus Polyamid od. dgl. luftdicht eingebracht und dann evakuiert wird und dadurch dem anliegenden Druckgradienten unterworfen wird, wobei das Phenolharz-Pulver zwischen den willkürlich angeordneten Kohlenstofffaserbündeln sich verflüssigt und durch das aufgebrachte Vakuum in die evakuierten Porenräume fließt und bei Temperaturen oberhalb von 120°C aushärtet und die Kohlenstofffaserbündel im Körper fest fixiert werden.

8. Verfahren nach einem der vorangehenden Ansprüche,
**dadurch gekennzeichnet,**
**daß** als carbonisierbares Matrix-Harz bei der Formgebung ein trockenes Phenolharz-Pulver oder eine Phenolharz-Preßmasse verwendet wird.

9. Verfahren nach einem der vorangehenden Ansprüche,
**dadurch gekennzeichnet,**
**daß** das Silizieren der C/C-Halbzeuge unter Vakuum- oder Schutzgasatmosphäre durchgeführt wird und eine Maximaltemperatur von 1.800°C nicht überschritten wird.

10. Siliciumcarbid-Verbundwerkstoff, insbesondere hergestellt nach einem Verfahren gemäß einer der vorangehenden Ansprüche, wobei
a) über den keramischen Verbundwerkstoff isotrop und homogen verteilte, verstärkend wirkende kurze Kohlenstofffaser-Rovings/-bündel mit einer Länge von zwischen 2 und 20 mm, vorzugsweise 5 bis 7 mm, die über eine Matrix aus SiC mit gegebenenfalls bis zu 5 Gew.% Si verbunden sind, wobei der Kohlenstoff durch eine Carbonisierung von Faserschlichten aus Epoxydharz und/oder Glycerin und/oder Furfurylalkohol und einer Phenolharz-Matrix vor der Silizierung entstanden ist,
b) eine aus Siliciumcarbid mit gegebenenfalls bis zu 5 Gew.% Si bestehende Matrix vorhanden ist, die durch Reaktion in dem Halbzeug für den Verbundwerkstoff vorhandenen, durch Carbonisierung einer Schlichte und der Phenolharz-Matrix entstandenen Kohlenstoff-Matrix mit flüssig infiltriertem Silicium entstanden ist, wobei
c) ein geschlossenes Porenvolumen von maximal 1 % und eine Bruchdehnung in Abhängigkeit von dem verstärkend wirkenden Fasergehalt im Bereich von 0,2 bis 0,6 % vorhanden ist.

11. Siliciumcarbid-Verbundwerkstoff nach Anspruch 10
**gekennzeichnet durch**
eine die Kohlenstoffaserbündel umgebende Hülle, die **durch** Carbonisierung einer Faserschlichte bestehend aus Epoxydharz und/oder Glycerin und/oder Furfurylalkohol entstanden ist.

12. Siliciumcarbid-Verbundwerkstoff nach Anspruch 10 oder 11
**daduch gekennzeichnet,**
**daß** die aus Siliciumcarbid bestehende Matrix nicht mehr als 5 Gew.-% elementares Silicium enthält, vorzugsweise weniger als 1 Gew.-%.

13. Verwendung eines Siliciumcarbid-Verbundwerkstoffes nach Anspruch 10 oder hergestellt nach Anspruch 1 für
a) Schmelztiegel für Glas- und Nichteisenmetalle,
b) Raketendüsen,
c) Brennerkomponenten,
d) Ofenmuffeln,
e) Wärmetauscher,
f) Turbinenbautelle,
g) Schutzrohre und Meßsonden,
h) opto-mechanische Strukturen,
i) ballistische Komponenten, wie Panzerungs- und Prallplatten od. dgl.

14. Verwendung eines Siliciumcarbid-Verbundwerkstoffes nach Anspruch 10 oder hergestellt nach Anspruch 1 für
a) Hochleistungsbremsscheiben,
b) Reibbeläge.

## Claims

1. Method of making a silicon carbide composite material that has been reinforced by means of carbon short fibres, and a moulded body consisting of it, using carbon fibre rovings of carbon fibres or carbon fibre bundles, which are coated with epoxy resin and/or glycerine and/or furfuryl alcohol and/or hydrosilicons and subsequently dried and hardened, with at least the following process steps:
a) mixing the comminuted rovings with a dry phenol resin powder or the like, or dry, synthetic resin containing carbon,
b) shaping under pressure and/or temperature, whereas to produce a semi-finished product that is close to the final form, or a slab material, the material mixture is introduced into a corresponding compression mould, wherein by means of the vacuum bag method, the mould is subjected to a low pressure of <200 mbar, at a temperature of 70°C to 150°C or to produce a semi-finished product that is close to the final form, or a slab material the material mixture is brought into the desired form by means of a stamping press or by means of isostatic pressing up to 12 mbar,
c) removal from mould after hardening,
d) melt infiltration of silicon at temperatures above the melting point of silicon in a vacuum or under a protective atmosphere whereas the final form semi-finished product or the slab material as moulded body is heated up to a temperature above the melting point of silicon of 1,405°C with carbonisation of the phenol resin matrix between the fibre bundles of the semi-finished product to carbon, with an intermediate stage of a carbon fibre-reinforced carbon C/C, wherein 30 to 50 per cent by weight is exhaled as a pyrolysis product, with formation of pore spaces with a temperature increase above the melting point of the silicon and introduction of the silicon into the pores and capillaries that have been formed, and carbonisation of the silicon whilst maintaining the short carbon fibres or fibre bundles.

2. Method in accordance with claim 1, **characterised in that** the moulded body that has been removed from the mould and hardened is carbonised before the smelt infiltration with silicon in a thermic process in a vacuum or in a protective atmosphere.

3. Method in accordance with claim 1 or 2, **characterised in that** the comminution of the coated fibres and fibre bundles is into fragments of the size 2 to 20 mm.

4. Method in accordance with one of the preceding claims, **characterised in that** the fibre pieces are mixed with a dry phenol resin powder and/or phenol novolak powder and/or granulate moulding materials of these substances.

5. Method in accordance with claim 4, **characterized in that** fibres of between 20 and 80 per cent by weight, preferably 50 to 60 per cent weight, are mixed with a proportion of the phenol resin powder and/or phenol novolak powder of between 20 and 80 per cent by weight, preferably 40 to 50 per cent by weight.

6. Method in accordance with claim 5, **characterised in that** in the mixing, powder from carbon and/or graphite and/or soot and/or silicon carbide and/or silicon are added.

7. Method in accordance with one of the preceding claims, **characterised in that** the filled mould is inserted, air-tight, into a vacuum bag of polyamide or the like, and then evacuated and thereby subjected to the prevailing pressure gradient, wherein the phenol resin powder liquefies between the randomly-arranged carbon fibre bundles and through the vacuum that is applied it flows into the evacuated pore spaces, and hardens at temperatures above 120°C, and the carbon fibre bundles are firmly fixed the body.

8. Method in accordance with one the preceding claims, **characterised in that** in the shaping, a dried phenol resin powder or a phenol resin moulding material is used as a carbonisable matrix resin.

9. Method in accordance with one of the preceding claims, **characterised in that** the siliconisation of the C/C semi-finished products is carried out under a vacuum or protective atmosphere, and a maximum temperature of 1,800°C is not exceeded.

10. Silicon carbide composite material, in particular manufactured according to a method in accordance with one of the preceding claims,
wherein
a) distributed isotropically and homogeneously over the ceramic composite material are short carbon fibre rovings or bundles of a length of between 2 and 20 mm, preferably 5 to 7 mm, which have a reinforcing effect and which are joined via a matrix of SIC with possibly up to 5% by weight of Si,
wherein
the carbon has arisen through a carbonisation of fibre sizes of epoxy resin and/or gylcerine and/or furfuryl alcohol and a phenol resin matrix before siliconisation,
b) a matrix is present which comprises silicon carbide with possibly up to 5% weight of Si, and which has arisen through a reation of a carbon matrix that is present in the semi-finished product for the composite material and has arisen through the carbonisation of a size and of the phenol resin matrix, with silicon that has infiltrated in liquid form,
wherein
c) there is a closed pore volume of a maximum of 1% and an elongation at rupture, depending on the fibre content that has a reinforcing effect, in range of 0.2 to 0.6%.

11. Silicon carbide composite material in accordance with claim 10, **characterised by** a shell which encloses the carbon fibre bundles and which has arisen through carbonisation of a fibre size comprising epoxy resin and/or glycerine and/or furfuryl alcohol.

12. Silicon carbide composite material in accordance with claim 10 or 11 **characterised in that** the matrix which comprises silicon carbide contains no more that 5% by weight of elemental silicon, preferably less than 1% by weight.

13. Use of a silicon carbide composite material in accordance with claim 10 or produced in accordance with claim 1, for
a) melting crucibles for glass-metals and non-ferrous metals,
b) rocket jets
c) burner components
d) furnace muffles
e) heat exchangers
f) turbine components
g) protective pipes and measurement probes
h) opto-mechanical structures
i) ballistic components such as armouring plates and baffle plates or the like.

14. Use of a silicon carbide compiste material in accordance with claim 10 or manufactured in accordance with claim 1, for
a) high performance brake disks
b) friction linings.

## Revendications

1. Procédé de fabrication d'un matériau composite de carbure de silicium renforcé par des fibres courtes de carbone et d'un article moulé consistant en celui-ci, en utilisant des stratifils de fibres de carbone en fibres de carbone ou faisceaux de fibres de carbone, qui sont revêtus de résine époxyde et/ou de glycérine et/ou de furfurylalcool et/ou de silanes, et ensuite séchés et durcis, avec au moins les étapes de procédé suivants :
a) Mélange du stratifil fragmenté avec une poudre de résine phénolique séchée ou similaire, ou une résine plastique séchée ;
b) Moulage sous pression et/pu température où le mélange de matière est introduit dans un moule de compression approprié pour obtenir un produit semi-fini ou un matériau en plaque, dans lequel le moule est soumis à une pression réduite < 200mbar à une température de 70°C à 150°C, grâce à un procédé au sac sous vide ou le mélange de matière est introduit dans le moule souhaité pour obtenir un produit semi-fini ou un matériau en plaque, à l'aide d' une presse à estampe ou à l'aide d'une presse isostatique jusqu'à 12 bar.
c) Démoulage après durcissement ;
d) Infiltration à l'état fondu de silicium à des températures supérieures au point de fusion du silicium sous vide ou atmosphère de gaz protecteur où le produit semi-fini ou le matériau en plaque est chauffé jusqu'à une température supérieure au point de fusion du silicium de 1450°C avec carbonisation de la matrice de résine phénolique entre les faisceaux de fibre du produit semi-fini en carbone, avec un stade intermédiaire d'un carbone renforcé par des fibres de carbone C/C, où 30 à 50% en poids sont dégazés comme produit de pyrolyse en format des espaces poreux lors de l'augmentation de la température au-delà du point de fusion du silicium et en incorporant le silicium dans les pores et capillaires formés et en formant le carbure de silicium en maintenant les fibres courtes ou faisceaux de fibres courtes de carbone.

2. Procédé selon revendication 1, **caractérisé en ce que** l'article moulé démoulé et durci est carbonisé avant l'infiltration à l'état fondu avec le silicium, par un processus thermique sous vide ou atmosphère de gaz protecteur.

3. Procédé selon la revendication 1 ou 2, **caractérisé en ce que** la fragmentation des fibres ou faisceaux de fibres revêtues est réalisée jusqu'à des fragments ayant une taille allant de 2 à 20 mm.

4. Procédé selon l'une quelconque des revendications précédences, **caractérisé en ce que** le melange des fragments de fibre est exécuté avec une poudre de résine phénolique sèche et/ou de poudre phénol-novolaque et/ou matière moulée en granulé en ces matières.

5. Procédé selon la revendication 4, **caractérisé en ce que** l'on réalise un mélange de 20 à 80% en poids, de préférence 50 à 60% en poids de fibres, avec une fraction de poudre de résine phénolique et/ou de poudre phénol-novolaque, allant de 20 à 80% en poids, de préférence de 40 à 50%.

6. Procédé selon revendication 5, **caractérisé en ce que** lors du mélange, on ajoute une poudre de carbone et/ou graphite et/ou suie et/ou carbure de silicium et/ou silicium.

7. Procédé selon l'une quelconque des revendications précédentes, **caractérisé en ce que** le moule plein est introduit dans un sac sous vide en polyamide ou similaire, étanche à l'air, puis évacué et soumis á des gradients de pression, où la poudre de résine phénolique se liquéfie entre les faisceau de fibre de carbone disposés de manière arbitraire, s' écoule dans les espaces évacués des pores par le vide appliqué, durci à des températures supérieures à 120°C et est fixée solidement dans le faisceau de fibre de carbone.

8. Procédé selon l'une quelconque des revendications précédentes, **caractérisé en ce que** l'on utilise comme résine de matrice carbonisable lors du moulage, une poudre de résine phénolique sèche ou une matière moulée de résine phénolique.

9. Procédé selon l'une quelconque des revendications précédentes, **caractérisé en ce que** la silicification du produit semi-fini C/C est réalisée sous vide ou atmosphère de gaz protecteur et **en ce qu'**on ne dépasse pas une température maximale 1800°C.

10. Matériau composite de carbure de silicium, préparé en particulier par un procédé selon l'une quelconque des revendications précédentes, dans lequel :
a) des stratifils/faisceaux de fibres de carbone courtes, agissant comme renforcement, distribués de manière isotrope et homogène dans un matériau composite céramique, ayant une longueur allant de 2 à 20 mm, de préférence de 5 à 7 mm, sont reliés par une matrice en SiC avec éventuellement jusqu'à 5% en poids de Si, où le carbone est formé par carbonisation d'enduit des fibres en résine époxyde et/ou glycérine et/ou furfurylalcool et d'une matrice de résine phénolique avant la silication ;
b) une matrice consistant en du carbure de silicium avec éventuellement jusqu'à 5% en poids de Si est présente, qui est formée par réaction dans le produit semi-fini pour le matériau composite, par carbonisation d' un enduit et de la matrice de carbone formée de la matrice de résine phénolique avec le silicium liquide infiltré, où
c) on observe un volume des pores fermés de maximum 1% et un allongement à la rupture en fonction de la teneur en fibre de renforcement, situé dans l'intervalle allant de 0,2 à 0,6%.

11. Matériau composite de carbure de silicium selon la revendication 10, **caractérisé par** une enveloppe entourant le faisceau de fibre de carbone qui est formé par carbonisation d'un enduit des fibre consistant en une résine époxyde et/pou la glycérine et/ou le furfurylalcool.

12. Matériau composite de carbure de silicium selon la revendication 10 ou 11, **caractérisé en ce que** la matrice consistant en du carbure de silicium ne contient pas plus de 5% de silicium élémentaire, de préférence moins de 1% en poids.

13. Utilisation d'un matériau composite de carbure de silicium selon la revendication 10 ou préparé selon la revendication 1, pour
a) des creusets pour le verre et des métaux non ferreux,
b) buses de fusée,
c) composants de brûleur,
d) moufle de four,
e) échangeur de chaleur,
f) élément de turbine,
g) tubes protecteurs et sondes de mesures,
h) structures optomécaniques,
i) composants balistiques, comme plaques de blindage et tôles de chicane ou similaire.

14. Utilisation d'un matériau composite de carbure de silicium selon la revendication 10 ou préparé selon la revendication 1, pour
a) disques de frein à haut performance,
b) garnitures d'adhérence.
